# EUROPEAN PATENT SPECIFICATION

(11) **EP 3 967 587 B1**
(45) Date of publication and mention of the grant of the patent: **01.11.2023**
(21) Application number: 20805620.0
(22) Date of filing: 11.05.2020
(51) Int. Cl.: B62L 3/08, B60T 7/12, B60T 8/00, B60T 8/26, B60W 10/18, B62J 27/00, B60W 30/09, B60T 7/22, B60T 8/17, B60T 8/32

(54) **LEANABLE VEHICLE EQUIPPED WITH RIDER ASSISTANCE CONTROL DEVICE FOR OBSTACLES**
MIT FAHRERASSISTENZSTEUERUNGSSYSTEM FÜR HINDERNISSE AUSGESTATTETES, NEIGBARES FAHRZEUG
VÉHICULE INCLINABLE ÉQUIPÉ D'UN DISPOSITIF DE COMMANDE D'ASSISTANCE AU CONDUCTEUR POUR DES OBSTACLES

(30) Priority: 10.05.2019 JP 2019089836
(43) Date of publication of application: 16.03.2022
(73) Proprietor: Yamaha Hatsudoki Kabushiki Kaisha, Iwata-shi, Shizuoka 438-8501 (JP)
(72) Inventor: YASUKAWA, Risa, Iwata-shi, Shizuoka 438-8501 (JP); KOBAYASHI, Hiroshi, Iwata-shi, Shizuoka 438-8501 (JP); KISHI, Tomoaki, Iwata-shi, Shizuoka 438-8501 (JP); TORIGOE, Hoshimi, Iwata-shi, Shizuoka 438-8501 (JP)
(74) Representative: Stöckeler, Ferdinand
(86) International application number: PCT/JP2020/018878
(87) International publication number: WO 2020/230769

(56) References cited:
- EP-A2- 3 124 370
- WO-A1-2018/185578
- JP-A- H0 550 972
- JP-A- 2006 069 303
- JP-A- 2012 214 189
- JP-A- 2018 177 046

## Description

### [Technical Field]

The present teaching relates to a leaning vehicle including a driving assist control device for obstacles, which is configured to control the assisting braking force based on a margin obtained based on the relationship between an obstacle and a host vehicle and on a brake operation by a rider.

### [Background Art]

For example, Patent Literature 1 proposes a leaning vehicle including a driving assist control device for obstacles, which is configured to control the assisting braking force based on (i) a margin which corresponds to an obstacle and is obtained based on the relationship between the obstacle and a host vehicle and (ii) a brake operation by a rider.

EP 3 124 370 A2 teaches an automatic brake device for a saddle riding type vehicle, which comprises a brake modulator that controls actuation of front and rear brakes. The brake modulator includes a collision possibility determining unit, an automatic brake control unit, and a brake operation determining unit. When the collision possibility determining unit determines that there is a possibility of collision, and the brake operation determining unit determines that brake operation by a driver is present, the automatic brake control unit changes a manner of increasing braking forces of the front and rear brakes according to the brake operation by the driver.

### [Citation List]

### [Patent Literatures]

[Patent Literature 1] JP 2006-069303 A

### [Summary]

### [Technical Problem]

There is a need for a leaning vehicle including a driving assist control device for obstacles, which is configured to perform control different from the control recited in Patent Literature 1.

An object of the present teaching is to provide a leaning vehicle which leans rightward in a vehicle left-right direction when turning right and leans leftward in the vehicle left-right direction when turning left, and includes a driving assist control device for obstacles, which is configured to perform control different from known control schemes.

### [Solution to Problem]

The inventors of the present teaching diligently studied the assisting braking force of a leaning vehicle including a driving assist control device for obstacles, which is configured to control the assisting braking force based on a margin obtained based on the relationship between an obstacle and the host vehicle and on a brake operation by the rider, and found knowledges described below and conceived of the present teaching.

First knowledge is that there is a case where the rider decreases a brake operation amount in a scene in which there is an obstacle ahead of a leaning vehicle that is running and the rider deals with the obstacle by both a change of the traveling direction of the leaning vehicle and the braking force generated by a brake operation by the rider.

Second knowledge is that, unlike a scene in which the rider deals with the obstacle by the braking force generated by a brake operation by the rider without changing the traveling direction of the leaning vehicle, the rider performs a brake operation in consideration of the action of the leaning vehicle in the left-right direction in the scene in which the rider deals with the obstacle by both the change of the traveling direction of the leaning vehicle and the braking force generated by the brake operation by the rider. When braking force is generated in a leaning vehicle leaning in the left-right direction, the leaning vehicle tends to stand up. It is considered that the rider performs a brake operation in consideration of this action. The action is specific to leaning vehicles, and is not observed in automobiles. A feature that the rider performs the brake operation in consideration of the action was found through diligent study of brake operations by riders riding leaning vehicles in both of the case involving a change in the traveling direction of the leaning vehicle and the case not involving a change in the traveling direction of the leaning vehicle. In other words, this feature cannot be found no matter how a scene in which a brake operation is not performed by the rider and a scene involving or not involving a change in the traveling direction of the leaning vehicle are observed in a detailed manner.

A leaning vehicle including a driving assist control device for obstacles of an embodiment of the present teaching has arrangements described below.

A leaning vehicle comprises a driving assist control device for obstacles, which is mounted on a leaning vehicle body frame leaning rightward in a vehicle left-right direction when turning right and leaning leftward in the vehicle left-right direction when turning left, and is configured to control the assisting braking force based on at least one of a front wheel brake operation amount of a front wheel brake operator or a rear wheel brake operation amount of a rear wheel brake operator and a margin obtained based on the relationship between an obstacle and the leaning vehicle. The driving assist control device for obstacles controls the assisting braking force so as to establish at least one of:
a relationship 1 in which, in a state in which braking force including the assisting braking force is generated by both a front wheel brake and a rear wheel brake or by only the front wheel brake, based on at least the front wheel brake operation amount and the margin obtained based on the relationship between the obstacle and the leaning vehicle, at least the front wheel braking force generated by the front wheel brake is decreased in response to the decrease in the front wheel brake operation amount; or
a relationship 2 in which, in a state in which braking force including the assisting braking force is generated by both the front wheel brake and the rear wheel brake or by only the rear wheel brake, based on at least the rear wheel brake operation amount and the margin obtained based on the relationship between the obstacle and the leaning vehicle, at least the rear wheel braking force generated by the rear wheel brake is decreased in response to the decrease in the rear wheel brake operation amount.

The leaning vehicle including the driving assist control device for obstacles of an embodiment of the present teaching may include arrangements described below. The driving assist control device for obstacles controls the assisting braking force so as to establish at least one of:
a relationship 3 in which, in a state in which braking force including the assisting braking force is generated by both the front wheel brake and the rear wheel brake or by only the front wheel brake,
based on at least the front wheel brake operation amount and the margin obtained based on the relationship between the obstacle and the leaning vehicle, at least the front wheel braking force is decreased in response to the decrease in the front wheel brake operation amount and at least the front wheel braking force is increased in response to the increase in the front wheel brake operation amount; or
a relationship 4 in which, in a state in which braking force including the assisting braking force is generated by both the front wheel brake and the rear wheel brake or by only the rear wheel brake, based on at least the rear wheel brake operation amount and the margin obtained based on the relationship between the obstacle and the leaning vehicle, at least the rear wheel braking force is decreased in response to the decrease in the rear wheel brake operation amount and at least the rear wheel braking force is increased in response to the increase in the rear wheel brake operation amount.

The leaning vehicle including the driving assist control device for obstacles of an embodiment of the present teaching may include arrangements described below.

The driving assist control device for obstacles controls the assisting braking force so as to establish a relationship 5 in which, in a state in which braking force including the assisting braking force is generated by both the front wheel brake and the rear wheel brake, based on the front wheel brake operation amount, the rear wheel brake operation amount, and the margin obtained based on the relationship between the obstacle and the leaning vehicle, total braking force which is the sum total of the front wheel braking force and the rear wheel braking force is decreased when one of the front wheel brake operation amount and the rear wheel brake operation amount is maintained whereas the other one of the amounts decreases.

The leaning vehicle including the driving assist control device for obstacles of an embodiment of the present teaching may include arrangements described below.

The driving assist control device for obstacles controls the assisting braking force so as to establish a relationship 6 in which, in a state in which braking force including the assisting braking force is generated by both the front wheel brake and the rear wheel brake, based on the front wheel brake operation amount, the rear wheel brake operation amount, and the margin obtained based on the relationship between the obstacle and the leaning vehicle, total braking force which is the sum total of the front wheel braking force and the rear wheel braking force is maintained when one of the front wheel brake operation amount and the rear wheel brake operation amount is maintained whereas the other one of the amounts decreases.

### [Advantageous Effects]

In a leaning vehicle leaning rightward in a vehicle left-right direction when turning right and leaning leftward in the vehicle left-right direction when turning left, the assisting braking force can be controlled in consideration of a scene in which a rider deals with an obstacle by activating a brake while changing the traveling direction, based on at least one of a front wheel brake operation amount or a rear wheel brake operation amount and a margin obtained based on the relationship between the obstacle and the leaning vehicle.

It is therefore possible to provide a leaning vehicle which leans rightward in a vehicle left-right direction when turning right and leans leftward in the vehicle left-right direction when turning left, and includes a driving assist control device for obstacles, which is configured to perform control different from known control schemes.

### [Relationship 1: Decrease in Front Wheel Brake Operation → Decrease in Front Wheel Braking Force]

The relationship 1 in the present teaching and the embodiments may include: a state in which, for example, when a front wheel brake operation amount decreases, a driving assist control device for obstacles decreases, maintains or prevents a change in, or increases the rear wheel braking force generated by a rear wheel brake.

### [Relationship 2: Decrease in Rear Wheel Brake Operation → Decrease in Rear Wheel Braking Force]

The relationship 2 in the present teaching and the embodiments may include: a state in which, for example, when a rear wheel brake operation amount decreases, a driving assist control device for obstacles decreases, maintains or prevents a change in, or increases the front wheel braking force generated by a front wheel brake.

### [Relationship 3: Increase or Decrease in Front Wheel Brake Operation → Increase or Decrease in Front Wheel Braking Force]

The relationship 3 in the present teaching and the embodiments may include: a state in which, for example, when a front wheel brake operation amount decreases, a driving assist control device for obstacles decreases, maintains or prevents a change in, or increases the rear wheel braking force generated by a rear wheel brake; and a state in which, for example, when a front wheel brake operation amount increases, the rear wheel braking force generated by a rear wheel brake is decreased, maintained or unchanged, or increased.

### [Relationship 4: Increase or Decrease in Rear Wheel Brake Operation → Increase or Decrease in Rear Wheel Braking Force]

The relationship 4 in the present teaching and the embodiments may include: a state in which, for example, when a rear wheel brake operation amount decreases, a driving assist control device for obstacles decreases, maintains or prevents a change in, or increases the front wheel braking force generated by a front wheel brake; and a state in which, for example, when a rear wheel brake operation amount increases, a driving assist control device for obstacles decreases, maintains or prevents a change in, or increases the front wheel braking force generated by a front wheel brake.

### [Relationship 5: Decrease in Total Braking Force]

The relationship 5 in the present teaching and the embodiments may include: a state in which, for example, when a rear wheel brake operation amount is maintained whereas a front wheel brake operation amount decreases, a driving assist control device for obstacles decreases, maintains or prevents a change in, or increases the rear wheel braking force generated by a rear wheel brake; and a state in which, for example, when a front wheel brake operation amount is maintained whereas a rear wheel brake operation amount decreases, a driving assist control device for obstacles decreases, maintains or prevents a change in, or increases the front wheel braking force generated by a front wheel brake.

### [Relationship 6: Maintenance of Total Braking Force]

The relationship 6 in the present teaching and the embodiments may include: a state in which, for example, when a rear wheel brake operation amount is maintained whereas a front wheel brake operation amount decreases, a driving assist control device for obstacles increases the rear wheel braking force generated by a rear wheel brake; and a state in which, for example, when a front wheel brake operation amount is maintained whereas a rear wheel brake operation amount decreases, a driving assist control device for obstacles increases the front wheel braking force generated by a front wheel brake.

### [Leaning Vehicle]

A leaning vehicle of the present teaching and embodiments is a vehicle which includes a leaning vehicle body frame structured to lean rightward in the vehicle left-right direction when turning right and lean leftward in the vehicle left-right direction when turning left. The vehicle includes at least one front wheel and at least one rear wheel. The leaning vehicle may include two front wheels and one or two rear wheels. The leaning vehicle may include one front wheel and one or two rear wheels. In the leaning vehicle, either the front wheel or the rear wheel may be steered. The leaning vehicle includes a driving source. The driving source may be an engine, a motor driven by electricity, or a hybrid driving source including both an engine and a motor. The leaning vehicle body frame is a member which mainly receives stress in the leaning vehicle. The leaning vehicle body frame may be a frame formed by combining a plurality of components, or may be an integrally-molded frame.

### [Brake Operation and Brake Operation Amount]

The leaning vehicle includes a front wheel brake, a rear wheel brake, a front wheel brake operator, and a rear wheel brake operator. The front wheel brake is configured to apply the front wheel braking force to the front wheel. The rear wheel brake is configured to apply the rear wheel braking force to the rear wheel. The front wheel brake, the rear wheel brake, or a combination of the front wheel brake and the rear wheel brake may be simply referred to as a brake. Each of the front wheel brake operator and the rear wheel brake operator may be a lever operated by a hand of the rider or a pedal operated by a foot of the rider. The front wheel brake operator may be arranged to be able to operate not only the front wheel brake but also the rear wheel brake. The rear wheel brake operator may be arranged to be able to operate not only the rear wheel brake but also the front wheel brake. The front wheel brake and the rear wheel brake may be operated by a single brake operator. A brake operation in the present teaching and the embodiments indicates an action to operate a brake operator provided in the leaning vehicle. A brake operation amount indicates to what extent the rider performs the brake operation. The brake operation amount may be information directly indicating the brake operation amount, or information indirectly indicating the brake operation amount, e.g., information correlated to the brake operation amount. Acquisition of a brake operation amount indicates that information indicating a brake operation amount is directly acquired or information indicating a brake operation amount is indirectly acquired.

### [Rider Assistance Control Device for Obstacles and Brake Assist Control Device]

A driving assist control device for obstacles of the present teaching and the embodiments includes a brake assist control device which is configured to control the assisting braking force based on (i) at least one of a front wheel brake operation amount of a front wheel brake operator or a rear wheel brake operation amount of a rear wheel brake operator and (ii) a margin acquired based on the relationship between an obstacle and a host vehicle. The brake assist control device is a controller having a function of controlling the assisting braking force. The brake assist control device may have other functions. For example, when an ABS control device having a function of antilock braking system (ABS) has a function of controlling the assisting braking force, the ABS control device is regarded as a brake assist control device. The brake assist control device of the present teaching and the embodiments is electrically connected to a brake, a margin related sensor which is required to determine a margin which is acquired based on the relationship between an obstacle and a host vehicle, and a brake operation amount related sensor which is required to acquire an operation amount of a brake operator. The brake assist control device of the present teaching and the embodiments may be electrically connected to a leaning angle related sensor which is required to acquire at least one of leaning angular speed or leaning angular acceleration. Examples of the leaning angle related sensor include an IMU (Inertial Measurement Unit), a GPS (Global Positioning System), and a camera for obtaining a leaning angle from an image. The margin related sensor is, for example, a camera taking images ahead of the leaning vehicle, a millimeter wave radar, a LIDAR, or a combination of these devices. Examples of the brake operation amount related sensor include an angular sensor configured to detect a rotational angle of the brake operator and a hydraulic pressure sensor configured to detect hydraulic pressure generated by the brake operator. Each sensor may be of any type as long as the functions described above are achieved. The brake has a function of generating braking force upon receiving an electrical signal from the brake assist control device. The brake may be of any type as long as the function described above is achieved. The brake assist control device may be electrically connected to a sensor different from the sensors above. The brake assist control device may be controlled based on a signal acquired by a sensor different from the sensors above. The brake assist control device may have a function of the antilock braking system (ABS). In this case, the brake assist control device may be electrically connected to a sensor capable of detecting a slipping state of a wheel. The brake assist control device may control only braking force applied to the front wheel, for example. The brake assist control device may control only braking force applied to the rear wheel, for example. The brake assist control device may control braking forces applied to the front wheel and the rear wheel, for example. The brake assist control device may control total braking force applied to the front wheel and the rear wheel. The brake assist control device may control a mechanically-connected brake which is a brake mechanically connected to a brake operator. The brake assist control device may control an electrically-connected brake which is a brake not mechanically but electrically connected to a brake operator. The brake assist control device may control a brake that involves both mechanical connection and electrical connection.

### [Margin Acquired Based on Relationship between Obstacle and Host Vehicle]

In the present teaching and the embodiments, a margin acquired based on the relationship between an obstacle and a host vehicle is a margin when a rider deals with an obstacle. The margin is acquired based on the relative speed between an obstacle and a host vehicle, for example. The margin is information such as a numerical value and the magnitude of an analog signal. When the margin is higher than a reference value, there is a margin in comparison with the reference value. The reference value may be set in advance in accordance with each type of the leaning vehicles. The margin may be corrected or learned based on signals obtained by various types of sensors. The margin may be information directly indicating the margin or information indirectly indicating the margin such as information correlated with the margin. Acquisition of a margin indicates acquisition of information directly indicating the margin or acquisition of information indirectly indicating the margin.

### [Assisting Braking Force]

The assisting braking force of the present teaching and the embodiments is part of a braking force generated by a brake operation by a rider, and is increased or decreased under the control of the brake assist control device based on (i) a margin corresponding to an obstacle and acquired based on the relationship between the obstacle and the host vehicle and (ii) a brake operation by the rider. For example, the assisting braking force is braking force which is increased or decreased under the control of the brake assist control device so that braking force generated by an operation of the brake operator by the rider is different when the operation amount of the brake operator is the same but another condition such as the margin and the leaning angle of the leaning vehicle is different. For example, the assisting braking force is braking force added, under the control of the brake assist control device, to mechanical braking force generated by an operation of the brake operator by the rider, when the brake operator is mechanically connected to the brake. The mechanical connection is, for example, connection by a pipe filled with brake oil or connection by a brake wire. For example, when the brake operator is connected to the brake not mechanically but electrically, it is difficult to clearly discern only the assisting braking force from the braking force generated by an operation of the brake operator by the rider. However, for example, even when the brake operator is connected to the brake not mechanically but electrically, it is considered that the braking force includes the assisting braking force increased or decreased under the control of the brake assist control device, if the braking force generated in response to the same operation amount of the brake operator is different due to the difference in a condition other than the operation amount of the brake operator. Meanwhile, braking force which is increased or decreased not based on (i) a margin corresponding to an obstacle determined and acquired based on the relationship between the obstacle and the host vehicle and (ii) a brake operation by the rider, e.g., braking force increased or decreased by the ABS is not the assisting braking force of the present teaching and the embodiments.

### [Control Amount of Controlling the Assisting Braking Force by Brake Assist Control Device]

In the present teaching and the embodiments, a control amount of controlling the assisting braking force by the brake assist control device can be set for each type of the leaning vehicles. For example, the control amount may be set so that the assisting braking force is a constant amount, a constant magnification, or a predetermined amount. For example, the control amount may be a control amount obtained by a calculation, a control amount obtained from a map set in advance, or a combination of them. The control amount may be corrected or learned based on signals obtained by various types of sensors. The assisting braking force may be zero. An operation to control the assisting braking force to be zero may be a control by which the control of setting the assisting braking force is terminated or circumvented, or a control by which the assisting braking force is set at zero. The control of the assisting braking force to be zero is not limited to any particular control scheme. In this case, the control amount may be zero. An operation to control the control amount to be zero may be a control by which the control of setting the control amount is terminated or circumvented, or a control by which the control amount is set at zero. The control of the control amount to be zero is not limited to any particular control scheme.

### [Leaning Angle]

A leaning angle in the present teaching and the embodiments is a tilt angle in the left-right direction of the leaning vehicle relative to the vertical direction. The tilt angle in the left-right direction of the leaning vehicle relative to the vertical direction indicates the tilt angle in the left-right direction of the leaning vehicle body frame of the leaning vehicle relative to the vertical direction. When the leaning angle is zero, the leaning vehicle is in an upright state in the left-right direction of the leaning vehicle. A state in which the absolute value of the leaning angle decreases is a state in which the leaning vehicle shifts from a state of leaning in the left-right direction of the leaning vehicle to the upright state. A state in which the absolute value of the leaning angle increases is a state in which the leaning vehicle shifts from the upright state to the state of leaning in the left-right direction of the leaning vehicle. The time change rate of the leaning angle during this shift is equivalent to the leaning angular speed. The time change rate of the leaning angular speed is equivalent to the leaning angular acceleration. The leaning angular speed or the leaning angular acceleration may be information directly indicating the leaning angular speed or the leaning angular acceleration, or may be information indirectly indicating the leaning angular speed or the leaning angular acceleration, such as information correlated to the leaning angular speed or the leaning angular acceleration. Acquisition of the leaning angular speed or the leaning angular acceleration indicates acquisition of information directly indicating the leaning angular speed or the leaning angular acceleration or acquisition of information indirectly indicating the leaning angular speed or the leaning angular acceleration.

### [Technical Differences from Other Driving Assist Control Devices and Combinations Thereof]

The brake assist control device of the present teaching and the embodiments is a driving assist control device of one type. In addition to this, as a driving assist control device, an AEB (Autonomous Emergency Braking) control device has been proposed. These two devices are technologically different in the following points. The brake assist control device is a technology of controlling assisting braking force based on an operation of the brake operator by the rider. Meanwhile, the AEB control device is a technology of automatically controlling the braking force even if the brake operator is not operated. These two control devices are significantly different technologies from the viewpoint of the brake operation by the rider. In addition to the above, the brake assist control device is a technology designed for scenes in which the brake operator is operated by the rider. The AEB control device is a technology designed for scenes in which the brake operator is not operated. These two control devices are significantly different technologies from the viewpoint of the brake operation by the rider. The brake assist control device may be combined with the AEB control device even though they are different technologies. For example, when an ABS control device having an AEB function has a function of controlling the assisting braking force, the AEB control device is regarded as a brake assist control device.

### [Notification Device]

A notification device of the present teaching and the embodiments is a device configured to send a notification to the rider. The notification device sends at least one of a visual notification, an audio notification, a tactile notification, or an olfactory notification. The notification device may send a notification by combining at least two of a visual notification, an audio notification, a tactile notification, and an olfactory notification.

### [Application to Front-Rear Linked Brake]

The brake assist control device which is a type of the driving assist control device for obstacles of the present teaching and the embodiments may control a front-rear linked brake. When the front wheel brake operator or the rear wheel brake operator is operated, the front-rear linked brake generates brake force at the rear wheel brake, and then generates braking force both at the front wheel brake and the rear wheel brake.

### [Specific Means]

The hardware structures of the driving assist control device of the present teaching and the embodiments and of the leaning vehicle including this control device are not detailed in this description. Because the features of the present teaching and the embodiments are technologies related to control, a person with ordinary skill in the art would understand that the leaning vehicle including the driving assist control device recited in the present teaching and the embodiments can be embodied by the hardware structures of a driving assist control device recited in Patent Literature 1 or another known document and the hardware structures of a leaning vehicle including this control device.

### [To Control Braking Force]

In the present teaching and the embodiments, to control braking force indicates to control the brake in order to acquire braking force. For example, when a brake whose braking force varies in accordance with a hydraulic pressure is employed, to control braking force indicates to control the hydraulic pressure. For example, when a drum brake whose braking force varies in accordance with the rotational angle of a lever is employed, to control braking force indicates to control the rotational angle of the lever. A specific target of control is changed in accordance with the type of the brake.

### [To Increase / Decrease / Maintain Braking Force]

In the present teaching and the embodiments, to increase / decrease / maintain total braking force is not limited to a case where actual total braking force is increased / decreased / maintained. To increase / decrease / maintain total braking force encompasses a case where control of increasing / decreasing / maintaining total braking force is considered to be performed even if actual total braking force is not increased / decreased / maintained. To increase / decrease / maintain the front wheel braking force and to increase / decrease / maintain the rear wheel braking force are similarly defined in the present teaching and the embodiments.

### [Control Based on A]

In the present teaching and the embodiments, the control based on A does not indicate that information used for the control is limited to A. The control based on A indicates that information based on which the control is performed includes information which is not A, and encompasses a case where the control is performed based on A and information which is not A.

### <Others>

In the present teaching and embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, terms "including", "comprising", "having", and derivatives thereof are used to encompass not only listed items and equivalents thereof but also additional items.

In the present teaching and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In the present teaching and the embodiments, the term "preferable" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In this specification, an arrangement which is explained by using the term "may" exerts at least the above-described effects of the arrangement of claim 1.

In the present teaching and the embodiments, the preferred arrangements of the different aspects described above may be variously combined. Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment. Furthermore, the present teaching may be implemented by suitably combining below-described embodiments and modifications.

### Brief Description of Drawings

FIG. 1 outlines a leaning vehicle of the First Embodiment of the present teaching.
FIG. 2 outlines a leaning vehicle of the Second Embodiment of the present teaching.
FIG. 3 outlines a leaning vehicle of the Third Embodiment of the present teaching.
FIG. 4 outlines a leaning vehicle of the Fourth Embodiment of the present teaching.
FIG. 5 outlines a leaning vehicle of the Fifth Embodiment of the present teaching.

### [Description of Embodiments]

### [Definition of Directions]

In the drawings, U indicates a direction upward from a leaning vehicle, D indicates a direction downward from the leaning vehicle, L indicates a direction leftward from the leaning vehicle, R indicates a direction rightward from the leaning vehicle, F indicates a direction forward from the leaning vehicle, and Re indicates a direction rearward from the leaning vehicle.

### [First Embodiment]

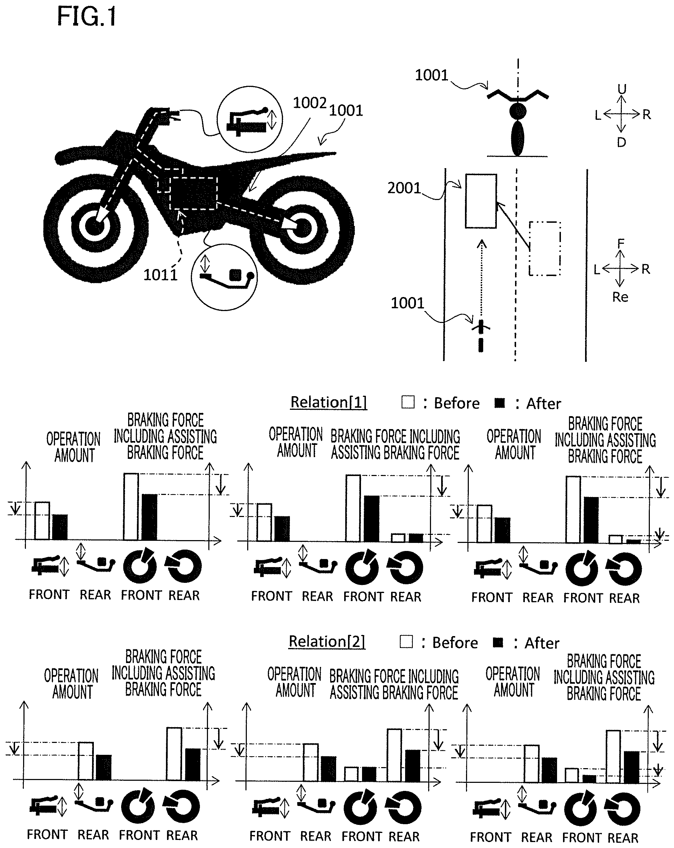

The following will describe a leaning vehicle 1001 of the First Embodiment of the present teaching with reference to FIG. 1. The leaning vehicle 1001 includes a driving assist control device 1011 for obstacles, which is mounted on a leaning vehicle body frame 1002 which leans rightward in the vehicle left-right direction when turning right and leans leftward in the vehicle left-right direction when turning left. The driving assist control device 1011 for obstacles is configured to control the assisting braking force based on (i) at least one of a front wheel brake operation amount of a front wheel brake operator or a rear wheel brake operation amount of a rear wheel brake operator and (ii) a margin acquired based on the relationship between an obstacle 2001 and a host vehicle 1001. This is easily understood by a scene in which an automobile which is an obstacle 2001 changes the lane and appears ahead of the leaning vehicle 1001 in running straight. The present teaching is not limited to this scene. The driving assist control device 1011 for obstacles is configured to control the assisting braking force so that at least one of the relationship 1 and the relationship 2 described below is established. Relationship 1: in a state in which braking force including the assisting braking force is generated by both a front wheel brake and a rear wheel brake or by only the front wheel brake, based on at least the front wheel brake operation amount and a margin obtained based on the relationship between the obstacle 2001 and the host vehicle 1001, at least the front wheel braking force generated by the front wheel brake is decreased in response to the decrease in a front wheel brake operation amount.

The relationship 1 is easily understood by, for example, a scene in which the rear wheel brake operation amount is zero and the front wheel brake operation amount decreases. In this scene, for example, the braking force including the assisting braking force may be generated only by the front wheel brake. In the scene, for example, the braking force including the assisting braking force may be generated by both the front wheel brake and the rear wheel brake. In this case, for example, the braking force of the rear wheel brake may be maintained even if the front wheel brake operation amount is decreased. Meanwhile, for example, the braking force of the rear wheel brake may be decreased when the front wheel brake operation amount is decreased.

Relationship 2: in a state in which braking force including the assisting braking force is generated by both a front wheel brake and a rear wheel brake or by only the rear wheel brake, based on at least the rear wheel brake operation amount and a margin obtained based on the relationship between the obstacle and the host vehicle, at least the rear wheel braking force generated by the rear wheel brake is decreased in response to the decrease in a rear wheel brake operation amount.

The relationship 2 is easily understood by, for example, a scene in which the front wheel brake operation amount is zero and the rear wheel brake operation amount decreases. In this scene, for example, the braking force including the assisting braking force may be generated only by the rear wheel brake. In the scene, for example, the braking force including the assisting braking force may be generated by both the rear wheel brake and the front wheel brake. In this case, for example, the braking force of the front wheel brake may be maintained even if the rear wheel brake operation amount is decreased. Meanwhile, for example, the braking force of the front wheel brake may be decreased when the rear wheel brake operation amount is decreased.

### [Second Embodiment]

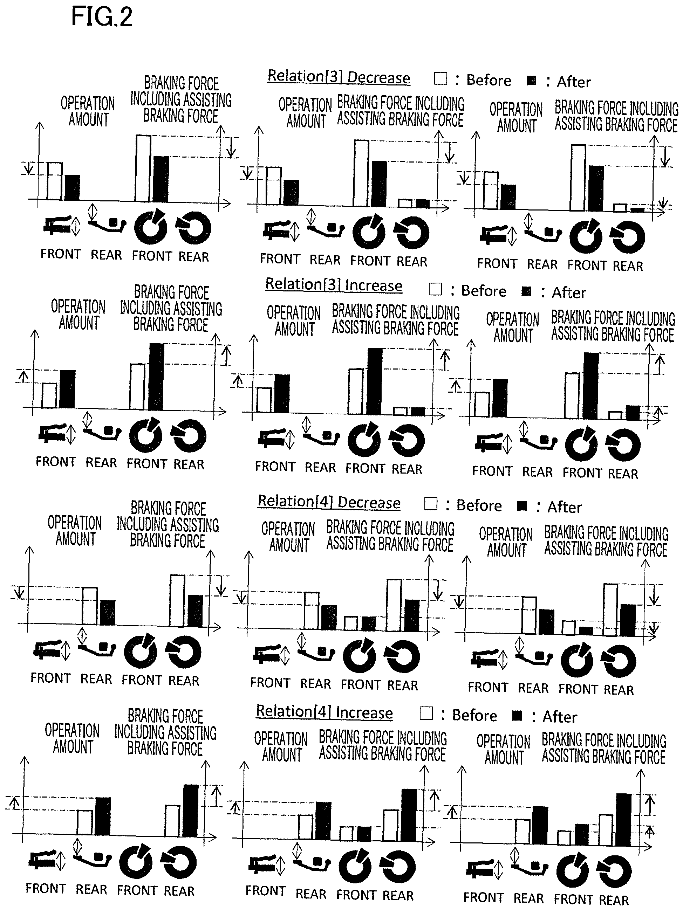

The following will describe a leaning vehicle 1001 of the Second Embodiment of the present teaching with reference to FIG. 2. In addition to the arrangements in the First Embodiment, a driving assist control device 1011 for obstacles in the Second Embodiment has arrangements described below. The driving assist control device 1011 for obstacles is configured to control the assisting braking force so that at least one of the relationship 3 and the relationship 4 described below is established. Relationship 3: in a state in which braking force including the assisting braking force is generated by both a front wheel brake and a rear wheel brake or by only the front wheel brake, based on at least the front wheel brake operation amount and a margin obtained based on the relationship between an obstacle and a host vehicle, at least the front wheel braking force is decreased in response to the decrease in a front wheel brake operation amount and at least the front wheel braking force is increased in response to the increase in the front wheel brake operation amount.

The relationship 3 is easily understood by, for example, a scene in which the rear wheel brake operation amount is zero and the front wheel brake operation amount decreases. In this scene, for example, the braking force including the assisting braking force may be generated only by the front wheel brake. In the scene, for example, the braking force including the assisting braking force may be generated by both the front wheel brake and the rear wheel brake. In the case, for example, the braking force of the rear wheel brake may be maintained even if the front wheel brake operation amount is decreased. Meanwhile, for example, the braking force of the rear wheel brake may be decreased when the front wheel brake operation amount is decreased. In the case, for example, the braking force of the rear wheel brake may be maintained even if the front wheel brake operation amount is increased. Meanwhile, for example, the braking force of the rear wheel brake may be increased when the front wheel brake operation amount is increased.

Relationship 4: in a state in which braking force including the assisting braking force is generated by both a front wheel brake and a rear wheel brake or by only the rear wheel brake, based on at least the rear wheel brake operation amount and a margin obtained based on the relationship between an obstacle and a host vehicle, at least the rear wheel braking force is decreased in response to the decrease in a rear wheel brake operation amount and at least the rear wheel braking force is increased in response to the increase in the rear wheel brake operation amount.

The relationship 4 is easily understood by, for example, a scene in which the front wheel brake operation amount is zero and the rear wheel brake operation amount decreases. In this scene, for example, the braking force including the assisting braking force may be generated only by the rear wheel brake. In the scene, for example, the braking force including the assisting braking force may be generated by both the rear wheel brake and the front wheel brake. In this case, for example, the braking force of the front wheel brake may be maintained even if the rear wheel brake operation amount is decreased. Meanwhile, for example, the braking force of the front wheel brake may be decreased when the rear wheel brake operation amount is decreased. In the case, for example, the braking force of the front wheel brake may be maintained even if the rear wheel brake operation amount is increased. Meanwhile, for example, the braking force of the front wheel brake may be decreased when the rear wheel brake operation amount is increased.

### [Third Embodiment]

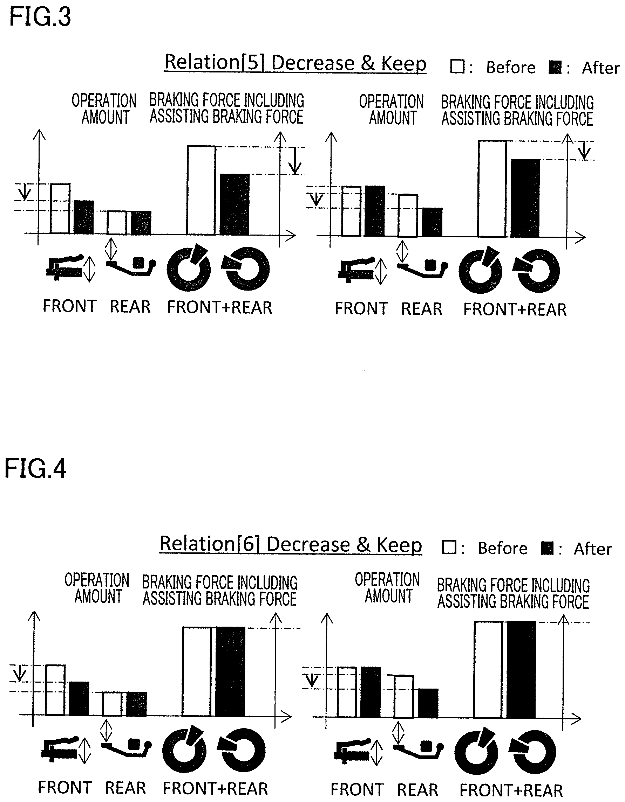

The following will describe a leaning vehicle 1001 of the Third Embodiment of the present teaching with reference to FIG. 3. In addition to the arrangements in the First Embodiment or Second Embodiment, a driving assist control device 1011 for obstacles in the Third Embodiment has arrangements described below. A driving assist control device 1011 for obstacles is configured to control the assisting braking force so that the relationship 5 described below is established. Relationship 5: in a state in which braking force including the assisting braking force is generated by both a front wheel brake and a rear wheel brake, based on the front wheel brake operation amount, the rear wheel brake operation amount, and a margin obtained based on the relationship between the obstacle and the host vehicle, total braking force which is the sum total of the front wheel braking force and the rear wheel braking force is decreased when one of a front wheel brake operation amount and a rear wheel brake operation amount is maintained whereas the other one of the amounts decreases. The relationship 5 is, for example, a scene in which the front wheel brake operation amount is decreased whereas the rear wheel brake operation amount is maintained. In this scene, the total braking force which is the sum total of the front wheel braking force and the rear wheel braking force is decreased. In this scene, neither the front wheel braking force nor the rear wheel braking force is zero. In other words, the braking force including the assisting braking force is generated by both the front wheel brake and the rear wheel brake. The relationship 5 is, in another example, a scene in which the rear wheel brake operation amount is decreased whereas the front wheel brake operation amount is maintained. In this scene, the total braking force which is the sum total of the front wheel braking force and the rear wheel braking force decreases. In this scene, neither the front wheel braking force nor the rear wheel braking force is zero. In other words, the braking force including the assisting braking force is generated by both the front wheel brake and the rear wheel brake.

### [Fourth Embodiment]

The following will describe a leaning vehicle 1001 of the Fourth Embodiment of the present teaching with reference to FIG. 4. In addition to the arrangements in the First Embodiment or Second Embodiment, a driving assist control device 1011 for obstacles in the Fourth Embodiment has arrangements described below. A driving assist control device 1011 for obstacles is configured to control the assisting braking force so that the relationship 6 described below is established. Relationship 6: in a state in which braking force including the assisting braking force is generated by both a front wheel brake and a rear wheel brake, based on the front wheel brake operation amount, the rear wheel brake operation amount, and a margin obtained based on the relationship between the obstacle and the host vehicle, total braking force which is the sum total of the front wheel braking force and the rear wheel braking force, is maintained when one of a front wheel brake operation amount and a rear wheel brake operation amount is maintained whereas the other one of the amounts decreases.

The relationship 6 is, for example, a scene in which the front wheel brake operation amount is decreased whereas the rear wheel brake operation amount is maintained. In this scene, the total braking force which is the sum total of the front wheel braking force and the rear wheel braking force is maintained. In this scene, neither the front wheel braking force nor the rear wheel braking force is zero. In other words, the braking force including the assisting braking force is generated by both the front wheel brake and the rear wheel brake. The relationship 6 is, in another example, a scene in which the rear wheel brake operation amount is decreased whereas the front wheel brake operation amount is maintained. In this scene, the total braking force which is the sum total of the front wheel braking force and the rear wheel braking force, is maintained. In this scene, neither the front wheel braking force nor the rear wheel braking force is zero. In other words, the braking force including the assisting braking force is generated by both the front wheel brake and the rear wheel brake.

### [Fifth Embodiment]

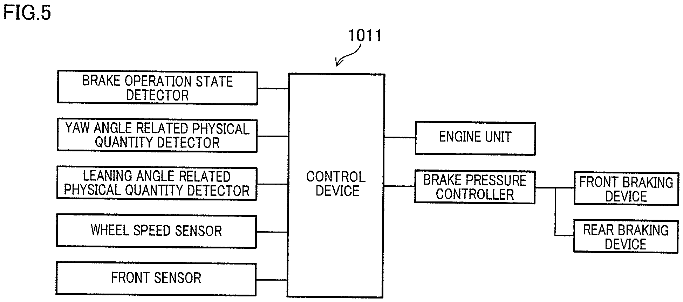

The following will describe a leaning vehicle of the Fifth Embodiment of the present teaching with reference to FIG. 5. The driving assist control device 1011 for obstacles of the First Embodiment, Second Embodiment, Third Embodiment, or Fourth Embodiment may be arranged as described below. The driving assist control device 1011 for obstacles is electrically connected to a front braking device, a rear braking device, a leaning angle related physical quantity detector which is required to acquire at least one of leaning angular speed or leaning angular acceleration, a front sensor required to determine a margin which is acquired based on the relationship between an obstacle 2001 and a host vehicle 1001, and a brake operation state detector which is required to acquire an operation amount of a brake operator. Furthermore, the driving assist control device 1011 for obstacles is electrically connected to an engine unit. The driving assist control device 1011 for obstacles may or may not be electrically connected to a leaning angle related physical quantity detector required to acquire at least one of the leaning angular speed or leaning angular acceleration. The driving assist control device 1011 for obstacles may or may not be electrically connected to a yaw angle related physical quantity detector required to acquire at least one of yaw angular speed or yaw angular acceleration.

The front braking device is an example of the front wheel brake or an example of the brake. The rear braking device is an example of the rear wheel brake or an example of the brake. The leaning angle related physical quantity detector is an example of the leaning angle related sensor. The front sensor is an example of the margin related sensor. The brake operation state detector is an example of the brake operation amount related sensor.

### [Reference Signs List]

1001 leaning vehicle (host vehicle)
1002 leaning vehicle body frame
2001 obstacle
1011 driving assist control device for obstacles

## Claims

1. A leaning vehicle (1001) comprising a driving assist control device (1011) for obstacles, which is mounted on a leaning vehicle body frame (1002) leaning rightward in a vehicle left-right direction when turning right and leaning leftward in the vehicle left-right direction when turning left, and is configured to control assisting braking force based on at least one of a front wheel brake operation amount of a front wheel brake operator or a rear wheel brake operation amount of a rear wheel brake operator and a margin obtained based on the relationship between an obstacle (2001) and the leaning vehicle (1001),
the driving assist control device (1011) for obstacles being **characterised in that** it is configured to control the assisting braking force so as to establish at least one of:
a relationship 1 in which, in a state in which braking force including the assisting braking force is generated by both a front wheel brake and a rear wheel brake or by only the front wheel brake, based on at least the front wheel brake operation amount and the margin obtained based on the relationship between the obstacle (2001) and the leaning vehicle (1001), at least the front wheel braking force generated by the front wheel brake is decreased in response to the decrease in the front wheel brake operation amount; or
a relationship 2 in which, in a state in which braking force including the assisting braking force is generated by both the front wheel brake and the rear wheel brake or by only the rear wheel brake, based on at least the rear wheel brake operation amount and the margin obtained based on the relationship between the obstacle (2001) and the leaning vehicle (1001), at least the rear wheel braking force generated by the rear wheel brake is decreased in response to the decrease in the rear wheel brake operation amount.

2. The leaning vehicle (1001) according to claim 1, wherein the driving assist control device (1011) for obstacles is configured to control the assisting braking force so as to establish at least one of:
a relationship 3 in which, in a state in which braking force including the assisting braking force is generated by both the front wheel brake and the rear wheel brake or by only the front wheel brake, based on at least the front wheel brake operation amount and the margin obtained based on the relationship between the obstacle (2001) and the leaning vehicle (1001), at least the front wheel braking force is decreased in response to the decrease in the front wheel brake operation amount and at least the front wheel braking force is increased in response to the increase in the front wheel brake operation amount; or
a relationship 4 in which, in a state in which braking force including the assisting braking force is generated by both the front wheel brake and the rear wheel brake or by only the rear wheel brake, based on at least the rear wheel brake operation amount and the margin obtained based on the relationship between the obstacle (2001) and the leaning vehicle (1001), at least the rear wheel braking force is decreased in response to the decrease in the rear wheel brake operation amount and at least the rear wheel braking force is increased in response to the increase in the rear wheel brake operation amount.

3. The leaning vehicle (1001) according to claim 1 or 2, wherein the driving assist control device (1011) for obstacles is configured to control the assisting braking force so as to establish
a relationship 5 in which, in a state in which braking force including the assisting braking force is generated by both the front wheel brake and the rear wheel brake, based on the front wheel brake operation amount, the rear wheel brake operation amount, and the margin obtained based on the relationship between the obstacle (2001) and the leaning vehicle (1001), total braking force which is the sum total of the front wheel braking force and the rear wheel braking force is decreased when one of the front wheel brake operation amount and the rear wheel brake operation amount is maintained whereas the other one of the amounts decreases.

4. The leaning vehicle (1001) according to claim 1 or 2, wherein the driving assist control device (1011) for obstacles is configured to control the assisting braking force so as to establish
a relationship 6 in which, in a state in which braking force including the assisting braking force is generated by both the front wheel brake and the rear wheel brake, based on the front wheel brake operation amount, the rear wheel brake operation amount, and the margin obtained based on the relationship between the obstacle (2001) and the leaning vehicle (1001), a total braking force which is the sum total of the front wheel braking force and the rear wheel braking force is maintained when one of the front wheel brake operation amount and the rear wheel brake operation amount is maintained whereas the other one of the amounts decreases.

## Patentansprüche

1. Ein Neigungsfahrzeug (1001) mit einer Fahrassistenzsteuervorrichtung (1011) für Hindernisse, die an einem Neigungsfahrzeugkörperrahmen (1002) montiert ist, der sich in einer Links-Rechts-Richtung des Fahrzeugs beim Rechts-Abbiegen nach rechts neigt und in der Links-Rechts-Richtung des Fahrzeugs beim Links-Abbiegen nach links neigt, und dazu ausgebildet ist, eine Assistenzbremskraft basierend auf zumindest einer einer Vorderrad-Bremsbedienmenge eines Vorderradbremsbedieners oder einer Hinterrad-Bremsbedienmenge eines Hinterradbremsbedieners und einem Spielraum zu steuern, der erhalten wird basierend auf der Beziehung zwischen einem Hindernis (2001) und dem Neigungsfahrzeug (1001),
wobei die Fahrassistenzsteuervorrichtung (1011) für Hindernisse **dadurch gekennzeichnet ist, dass** sie dazu ausgebildet ist, die Assistenzbremskraft so zu steuern, dass zumindest eine von Folgenden eingerichtet wird:
eine Beziehung 1, bei der in einem Zustand, in dem eine Bremskraft mit der Assistenzbremskraft durch sowohl eine Vorderradbremse als auch eine Hinterradbremse erzeugt wird, oder nur durch die Vorderradbremse, basierend auf zumindest der Vorderrad-Bremsbedienmenge und dem Spielraum, der erhalten wird basierend auf der Beziehung zwischen dem Hindernis (2001) und dem Neigungsfahrzeug (1001), zumindest die Vorderradbremskraft, die durch die Vorderradbremse erzeugt wird, ansprechend auf den Rückgang bei der Vorderrad-Bremsbedienmenge gesenkt wird; oder
eine Beziehung 2, bei der in einem Zustand, in dem eine Bremskraft mit der Assistenzbremskraft durch sowohl die Vorderradbremse als auch die Hinterradbremse erzeugt wird, oder nur durch die Hinterradbremse, basierend auf zumindest der Hinterrad-Bremsbedienmenge und dem Spielraum, der erhalten wird basierend auf der Beziehung zwischen dem Hindernis (2001) und dem Neigungsfahrzeug (1001), zumindest die Hinterradbremskraft, die durch die Hinterradbremse erzeugt wird, ansprechend auf den Rückgang bei der Hinterradbremsbedienmenge gesenkt wird.

2. Das Neigungsfahrzeug (1001) gemäß Anspruch 1, bei dem die Fahrassistenzsteuervorrichtung (1011) für Hindernisse dazu ausgebildet ist, die Assistenzbremskraft so zu steuern, dass zumindest eine von Folgenden eingerichtet wird:
eine Beziehung 3, bei der in einem Zustand, in dem eine Bremskraft mit der Assistenzbremskraft durch sowohl die Vorderradbremse als auch die Hinterradbremse erzeugt wird, oder nur durch die Vorderradbremse, basierend auf zumindest der Vorderrad-Bremsbedienmenge und dem Spielraum, der erhalten wird basierend auf der Beziehung zwischen dem Hindernis (2001) und dem Neigungsfahrzeug (1001), zumindest die Vorderradbremskraft ansprechend auf den Rückgang der Vorderrad-Bremsbedienmenge gesenkt wird und zumindest die Vorderradbremskraft ansprechend auf die Erhöhung der Vorderrad-Bremsbedienmenge erhöht wird; oder
eine Beziehung 4, bei der in einem Zustand, in dem eine Bremskraft mit der Assistenzbremskraft durch sowohl die Vorderradbremse als auch die Hinterradbremse erzeugt wird, oder nur durch die Hinterradbremse, basierend auf zumindest der Hinterrad-Bremsbedienmenge und dem Spielraum, der erhalten wird basierend auf der Beziehung zwischen dem Hindernis (2001) und dem Neigungsfahrzeug (1001), zumindest die Hinterradbremskraft ansprechend auf den Rückgang der Hinterrad-Bremsbedienmenge gesenkt wird und zumindest die Hinterradbremskraft ansprechend auf die Erhöhung bei der Hinterrad-Bremsbedienmenge erhöht wird.

3. Das Neigungsfahrzeug (1001) gemäß Anspruch 1 oder 2, bei dem die Fahrassistenzsteuervorrichtung (1011) für Hindernisse dazu ausgebildet ist, die Assistenzbremskraft so zu steuern, dass Folgendes eingerichtet wird:
eine Beziehung 5, bei der in einem Zustand, in dem eine Bremskraft mit der Assistenzbremskraft durch sowohl die Vorderradbremse als auch die Hinterradbremse erzeugt wird, basierend auf der Vorderrad-Bremsbedienmenge, der Hinterrad-Bremsbedienmenge und dem Spielraum, der erhalten wird basierend auf der Beziehung zwischen dem Hindernis (2001) und dem Neigungsfahrzeug (1001), eine Gesamtbremskraft, die die Gesamtsumme der Vorderradbremskraft und der Hinterradbremskraft ist, gesenkt wird, wenn eine der Vorderrad-Bremsbedienmenge und der Hinterrad-Bremsbedienmenge beibehalten wird, während die andere der Mengen sinkt.

4. Das Neigungsfahrzeug (1001) gemäß Anspruch 1 oder 2, bei dem die Fahrassistenzsteuervorrichtung (1011) für Hindernisse dazu ausgebildet ist, die Assistenzbremskraft so zu steuern, dass Folgendes eingerichtet wird:
eine Beziehung 6, bei der in einem Zustand, in dem eine Bremskraft mit der Assistenzbremskraft durch sowohl die Vorderradbremse als auch die Hinterradbremse erzeugt wird, basierend auf der Vorderrad-Bremsbedienmenge, der Hinterrad-Bremsbedienmenge und dem Spielraum, der erhalten wird basierend auf der Beziehung zwischen dem Hindernis (2001) und dem Neigungsfahrzeug (1001), eine Gesamtbremskraft, die die Gesamtsumme der Vorderradbremskraft und der Hinterradbremskraft ist, beibehalten wird, wenn eine der Vorderrad-Bremsbedienmenge und der Hinterrad-Bremsbedienmenge beibehalten wird, während die andere der Mengen sinkt.

## Revendications

1. Véhicule à inclinaison (1001) comprenant un dispositif de commande d'assistance à la conduite (1011) pour les obstacles qui est monté sur un châssis de carrosserie de véhicule à inclinaison (1002) incliné vers la droite dans une direction gauche-droite du véhicule lors d'un virage à droite et incliné vers la gauche dans la direction gauche-droite du véhicule lors d'un virage à gauche, et qui est configuré pour commander la force de freinage d'assistance sur base d'au moins l'une parmi une quantité d'actionnement de frein de roue avant d'un actionneur de frein de roue avant ou une quantité d'actionnement de frein de roue arrière d'un actionneur de frein de roue arrière et d'une marge obtenue sur base du rapport entre un obstacle (2001) et le véhicule à inclinaison (1001),
le dispositif de commande d'assistance à la conduite (10 11) pour les obstacles étant **caractérisé par le fait qu'**il est configuré pour commander la force de freinage d'assistance de manière à établir au moins l'un parmi:
un rapport 1 dans lequel, dans un état dans lequel la force de freinage comportant la force de freinage d'assistance est générée tant par un frein de roue avant que par un frein de roue arrière ou uniquement par le frein de roue avant, sur base d'au moins la quantité d'actionnement de frein de roue avant et de la marge obtenue sur base du rapport entre l'obstacle (2001) et le véhicule à inclinaison (1001), au moins la force de freinage de roue avant générée par le frein de roue avant est diminuée en réponse à la diminution de la quantité d'actionnement de frein de roue avant; ou
un rapport 2 dans lequel, dans un état dans lequel la force de freinage comportant la force de freinage d'assistance est générée tant par le frein de roue avant que par le frein de roue arrière ou uniquement par le frein de roue arrière, sur base d'au moins la quantité d'actionnement de frein de roue arrière et de la marge obtenue sur base du rapport entre l'obstacle (2001) et le véhicule à inclinaison (1001), au moins la force de freinage de roue arrière générée par le frein de roue arrière est diminuée en réponse à la diminution de la quantité d'actionnement de frein de roue arrière.

2. Véhicule à inclinaison (1001) selon la revendication 1, dans lequel le dispositif de commande d'assistance à la conduite (1011) pour obstacles est configuré pour commander la force de freinage d'assistance de manière à établir au moins l'un parmi:
un rapport 3 dans lequel, dans un état dans lequel la force de freinage comportant la force de freinage d'assistance est générée tant par le frein de roue avant que par le frein de roue arrière ou uniquement par le frein de roue avant, sur base d'au moins la quantité d'actionnement de frein de roue avant et de la marge obtenue sur base du rapport entre l'obstacle (2001) et le véhicule à inclinaison (1001), au moins la force de freinage de roue avant est diminuée en réponse à la diminution de la quantité d'actionnement de frein de roue avant et au moins la force de freinage de roue avant est augmentée en réponse à l'augmentation de la quantité d'actionnement de frein de roue avant; ou
un rapport 4 dans lequel, dans un état dans lequel la force de freinage comportant la force de freinage d'assistance est générée tant par le frein de roue avant que par le frein de roue arrière ou uniquement par le frein de roue arrière, sur base d'au moins la quantité d'actionnement de frein de roue arrière et de la marge obtenue sur base du rapport entre l'obstacle (2001) et le véhicule à inclinaison (1001), au moins la force de freinage de roue arrière est diminuée en réponse à la diminution de la quantité d'actionnement de frein de roue arrière et au moins la force de freinage de roue arrière est augmentée en réponse à l'augmentation de la quantité d'actionnement de frein de roue arrière.

3. Véhicule à inclinaison (1001) selon la revendication 1 ou 2, dans lequel le dispositif de commande d'assistance à la conduite (1011) pour obstacles est configuré pour commander la force de freinage d'assistance de manière à établir
un rapport 5 dans lequel, dans un état dans lequel la force de freinage comportant la force de freinage d'assistance est générée tant par le frein de roue avant que par le frein de roue arrière, sur base de la quantité d'actionnement de frein de roue avant, de la quantité d'actionnement de frein de roue arrière, et de la marge obtenue sur base du rapport entre l'obstacle (2001) et le véhicule à inclinaison (1001), la force de freinage totale, qui est la somme totale de la force de freinage de roue avant et de la force de freinage de roue arrière, est diminuée lorsque l'une parmi la quantité d'actionnement de frein de roue avant et la quantité d'actionnement de frein de roue arrière est maintenue, tandis que l'autre des quantités diminue.

4. Véhicule à inclinaison (1001) selon la revendication 1 ou 2, dans lequel le dispositif de commande d'assistance à la conduite (1011) pour obstacles est configuré pour commander la force de freinage d'assistance de manière à établir
un rapport 6 dans lequel, dans un état dans lequel la force de freinage comportant la force de freinage d'assistance est générée tant par le frein de roue avant que par le frein de roue arrière, sur base de la quantité d'actionnement de frein de roue avant, de la quantité d'actionnement de frein de roue arrière, et de la marge obtenue sur base du rapport entre l'obstacle (2001) et le véhicule à inclinaison (1001), une force de freinage totale, qui est la somme totale de la force de freinage de roue avant et de la force de freinage de roue arrière, est maintenue lorsque l'une parmi la quantité d'actionnement de frein de roue avant et la quantité d'actionnement de frein de roue arrière est maintenue, tandis que l'autre des quantités diminue.
